# EUROPÄISCHE PATENTSCHRIFT

(11) **EP 2 885 854 B1**
(45) Veröffentlichungstag und Bekanntmachung des Hinweises auf die Patenterteilung: **20.03.2019**
(21) Anmeldenummer: 13776743.0
(22) Anmeldetag: 25.09.2013
(51) Int. Cl.: H02K 1/02, F16C 32/04, H02K 1/14

(54) **RADIALMAGNETLAGER UND VERFAHREN ZUR HERSTELLUNG EINES RADIALMAGNETLAGERS**
RADIAL MAGNETIC BEARING AND METHOD FOR PRODUCING A RADIAL MAGNETIC BEARING
PALIER MAGNÉTIQUE RADIAL ET PROCÉDÉ POUR PRODUIRE UN PALIER MAGNÉTIQUE RADIAL

(30) Priorität: 26.09.2012 WO PCT/EP2012/068972
(43) Veröffentlichungstag der Anmeldung: 24.06.2015
(60) Teilanmeldung: 18000994.6
(73) Patentinhaber: Siemens Aktiengesellschaft, 80333 München (DE)
(72) Erfinder: LANG, Matthias, 13158 Berlin (DE); WANG, Wennie, Goleta, CA 93117 (US); HÖSLE, Markus, 91058 Erlangen (DE)
(86) Internationale Anmeldenummer: PCT/EP2013/069998
(87) Internationale Veröffentlichungsnummer: WO 2014/049007

(56) Entgegenhaltungen:
- EP-A1- 0 822 638
- EP-A1- 1 696 534
- FR-A1- 2 826 077
- JP-A- 2000 341 889
- JP-A- 2004 229 435
- JP-A- 2006 006 015
- JP-A- 2006 271 114
- JP-A- 2009 247 060
- US-A1- 2011 316 376

## Beschreibung

Die Erfindung betrifft ein Radialmagnetlager umfassend ein Aktivteil, welches als hohlzylinderförmiger Stator ausgeführt ist, Zähne, welche jeweils einen Zahnfuß und eine Zahnhöhe aufweisen und welche bezüglich des Hohlzylinders nach radial innen weisen, zwischen den Zähnen angeordnete, offene oder geschlossene Nuten, und in den Nuten eingebrachten Wicklungen, welche jeweils zumindest einen der Zähne umschließen, wobei das Aktivteil ab der äußeren Oberfläche der jeweiligen Zahnfüße und in Verlängerung der Zähne eine Aktivteildicke aufweist, die größer als die Zahnhöhe ist.

Radialmagnetlager gehören zu den elektrischen Maschinen, welche beispielsweise als Motoren, wie Linearmotoren und rotatorische Motoren, als Generatoren oder eben auch als Magnetlager, insbesondere Radialmagnetlager, ausgeführt sein können.

Ein derartiges Radialmagnetlager kann beispielsweise als aktives Radialmagnetlager ausgebildet sein, welches einen Stator und einen Rotor umfasst. Der Stator besteht üblicherweise aus einem Blechpaket mit mehreren Spulen. Diese Spulen erzeugen ein Magnetfeld, das eine Kraftwirkung auf den Rotor ausübt. Die dabei erzielbare Kraftdichte hängt unter anderem vom Quadrat der Magnetflussdichte ab. Um ein kompaktes Magnetlager zu bauen, muss eine möglichst hohe Flussdichte erzeugt werden können. Die maximale Flussdichte ist durch die Materialeigenschaften des eingesetzten Blechmaterials begrenzt. Magnetlager werden üblicherweise mit magnetischen Flussdichten im Bereich von 1,2 bis 1,5 Tesla betrieben.

Ein bekannter Weg zur Erhöhung der Magnetflussdichte ist der Einsatz von Blechmaterial aus Kobalt-Eisen-Legierungen (Co-Fe-Legierungen). Damit sind Flussdichten von bis zu 2 Tesla möglich. Das entspricht ungefähr einer Verdopplung der Kraftdichte. Ein Nachteil dieser Lösung ist das im Vergleich zu Standardblechen sehr teure Material. Weiterhin ist das Kobalt-Eisen-Blech nur in solchen Abmessungen verfügbar, die bei größeren Magnetlagern, beispielsweise bei Durchmessern größer als 300 mm, eine Segmentierung notwendig machen.

Dynamoelektrische rotatorische Maschinen und Radialmagnetlager weisen oftmals für den Fall, dass sie als Innenläufermaschine ausgeführt sind, geblechte Statoren mit zwischen radial nach innen weisenden Zähnen angeordneten Nuten auf, in denen die Wicklungssysteme, wie z. B. gesehnte Wicklungen oder Zahnspulen, positioniert sind. Die Dynamobleche des Stators weisen dabei materialbedingt eine vorgegebene magnetische Permeabilität auf.

Aus der US2011/0316376A1 ist ein Radialmagnetlager bekannt, welches ein als hohlzylinderförmiger Stator ausgeführtes Aktivteil mit Zähnen und um einige der Zähne herum geführten Wicklungen aufweist, wobei jeweils drei benachbarte Zähne mit den um die Zähne herum geführten Wicklungen E-förmige Elektromagnete bilden. Dabei können die Elektromagnete beispielsweise aus einer Kobalt-Eisen-Legierung bestehen. Weiterhin sind Keile am radial äußeren Rand zwischen den Elektromagneten sowie ein die Elektromagnete und die Keile aufnehmendes Gehäuse vorgesehen, wobei sowohl die Keile als auch das Gehäuse aus nicht-magnetischem Material bestehen.

Aus der JP 2009 247060 A ist ein Elektromotor mit einem Stator bekannt, welcher Statorzähne aufweist. Um unerwünschte hochfrequente Magnetisierungskomponenten zu unterdrücken, weisen die Statorzähne mit einer Zahnhöhe L jeweils eine Zahnspitze bis L/20 aus einem Material einer höheren magnetischen Permeabilität als der jeweilige verbleibende Statorzahn auf.

Der Erfindung liegt die Aufgabe zugrunde, ein Radialmagnetlager mit einem Aktivteil bereitzustellen, welches vergleichsweise gute magnetische Eigenschaften besitzt und dabei kostengünstig herzustellen ist.

Diese Aufgabe wird durch ein Radialmagnetlager der eingangs genannten Art dadurch gelöst, dass das Aktivteil ausgehend vom jeweiligen Zahnfuß bis zu einer Grenztiefe, welche höchstens gleich der Zahnhöhe ist, ein erstes Material mit einer ersten magnetischen Permeabilität umfasst und ab der Grenztiefe ein zweites Material mit einer zweiten magnetischen Permeabilität umfasst, wobei die erste magnetische Permeabilität größer als die zweite magnetische Permeabilität ist, und wobei die Grenztiefe zwischen 20 % und 100 % der Zahnhöhe beträgt.

Schließlich wird diese Aufgabe durch ein Verfahren der eingangs genannten Art durch die folgenden Verfahrensschritte gelöst:
- Herstellen der einzelnen Zähne,
   welche, falls die Grenztiefe kleiner als die Zahnhöhe ist, ausgehend vom jeweiligen Zahnfuß bis zu der Grenztiefe aus Blechen einer Kobalt-Eisen-Legierung gefertigt sind, welche, falls die Grenztiefe gleich der Zahnhöhe ist, aus Blechen einer Kobalt-Eisen-Legierung gefertigt sind,
   wobei die Bleche in axialer Richtung des Radialmagnetlagers gestapelt sind,
- Aufbringen einer Zahnwicklung auf jeden Zahn,
- Herstellen eines inneren Stator-Hohlzylinders, welcher aus in Umfangsrichtung angeordneten und jeweils mit einer Zahnwicklung versehenen Zähnen zusammengesetzt wird, wobei die Zahnfüße nach radial innen weisen,
- Herstellen eines äußeren Stator-Hohlzylinders aus geblechtem Stahl, wobei die Bleche in axialer Richtung des Radialmagnetlagers gestapelt sind,
- Zusammenfügen des inneren Stator-Hohlzylinders und des äußeren Stator-Hohlzylinders zum hohlzylinderförmigen Stator des Aktivteils.

Die Erfindung besteht darin, nur jene Teile des Stators aus einem hochpermeablen Material zu fertigen, die im Betrieb tendenziell hohen Flussdichten ausgesetzt sind. Das betrifft beim Aktivteil, insbesondere bei einem Magnetlagerstator, die Magnetpole, d.h. jene Teile der Zähne vom Zahnfuß bis zum tiefsten Punkt der Nut.

Im Betrieb des Aktivteils werden somit zwar Flussdichten erzielt, die geringer sind als bei einem Aktivteil, das komplett aus hochpermeablem Material gefertigt ist, jedoch sind höhere Flussdichten als bei konventionellen Blechmaterialien möglich.

Der Vorteil besteht aus der Kombination der beiden Eigenschaften, nämlich, dass höhere Flussdichten als bei konventionellen Blechmaterialien erreicht werden können und gleichzeitig Kostenvorteile im Vergleich zu Aktivteilen erzielt werden, welche ausschließlich aus hochpermeablem Material bestehen. Dies wird dadurch erreicht, dass nur jene Teile des Aktivteils aus teurerem, hochpermeablem Material bestehen, in welchem bei Betrieb des Aktivteils die höchsten magnetischen Flussdichten auftreten. Erfindungsgemäß ist daher vorgesehen, dass die Grenztiefe zwischen 20 % und 100 % der Zahnhöhe beträgt, so dass der jeweilige Zahn ausgehend vom Zahnfuß bis zumindest 20 % der Zahnhöhe das erste Material mit der größeren magnetischen Permeabilität umfasst.

Im Vergleich zu Aktivteilen mit gewöhnlichen Blechmaterialien ist es damit möglich, ein Aktivteil besonders wirtschaftlich herzustellen, weil die entsprechende elektrische Maschine bei gleichem Bauraum eine höhere Leistung erreichen kann oder bei geringerem Bauraum die gleiche Leistung erreicht. Und auch im Vergleich zu Aktivteilen, welche ausschließlich aus hochpermeablem Material bestehen, ergeben sich Vorteile, weil bei lediglich geringfügigen Einbußen in Bezug auf die magnetischen Eigenschaften bzw. die erreichbaren Leistungen eine bedeutende Kostenreduktion erreicht werden kann. Dies lässt sich auch dadurch begründen, dass das Volumen der Zähne vom jeweiligen Zahnfuß bis zur Zahnhöhe im Vergleich zum restlichen Aktivteil-Volumen vergleichsweise klein ausfallen kann. Dabei ist das Volumen der Zähne vom Zahnfuß bis zur Zahnhöhe für die magnetischen Eigenschaften und die erreichbare Leistung des Aktivteils ganz entscheidend, wohingegen das restliche Aktivteil-Volumen diesbezüglich von untergeordneter Bedeutung ist. Entsprechend kann jeweils der komplette Zahn vom Zahnfuß über die gesamte Zahnhöhe das erste Material mit der höheren magnetischen Permeabilität umfassen, so dass die Grenztiefe gleich der Zahnhöhe ist.

Sind die Nuten, in welchen die Wicklungen eingebracht sind, geschlossen, so stellen die Zahnfüße von benachbarten Zähnen einen Verbindungssteg zwischen diesen Zähnen her. Diese Verbindungsstege können positive Auswirkungen auf höhere Harmonische des Magnetflusses haben, wodurch insgesamt die Verluste reduziert werden können.

Der Hohlzylinder des Stators wird durch die ringförmig angeordneten Zähne gebildet, deren Zahnfüße jeweils nach radial innen weisen. Dabei sind die Zähne ausgehend vom jeweiligen Zahnfuß bis zur Grenztiefe aus dem ersten, hochpermeablen Material gefertigt und der restliche, radial außen liegende Teil des Stators aus dem zweiten Material mit geringerer Permeabilität gefertigt.

Das Radialmagnetlager dient der Aufnahme von radialen Kräften einer innerhalb des Radialmagnetlagers angeordneten Welle, wobei die Spulen des Radialmagnetlagers üblicherweise durch einen Umrichter mit Strom beaufschlagt werden, wobei der Umrichter wiederum durch eine Steuerung gesteuert wird. Um die Welle im Schweben zu halten und ein Berühren des Radialmagnetlager-Stators zu vermeiden, kann die Steuerung beispielsweise Sensordaten oder bestimmte Komponenten des auf die Spulen beaufschlagten Stroms verwenden.

Insbesondere kann die Grenztiefe im Bereich zwischen 20 % und 80 % der Zahnhöhe bzw. zwischen 40 % und 70 % der Zahnhöhe angesiedelt sein.

Bei einer vorteilhaften Ausgestaltung der Erfindung beträgt die Grenztiefe zwischen 1/3 und 2/3 der Zahnhöhe. Ein derartiges Aktivteil stellt einen vernünftigen Kompromiss zwischen ausreichend guten magnetischen Eigenschaften auf der einen Seite und den einhergehenden Kosten auf der anderen Seite dar.

Bei einer weiteren vorteilhaften Ausgestaltung der Erfindung ist die Grenztiefe im Wesentlichen halb so groß wie die Zahnhöhe. Somit kann die Grenztiefe insbesondere in einem Bereich zwischen 45 % und 55 % der Zahnhöhe angesiedelt sein.

Eine besonders kostengünstige Variante des Aktivteils kann dadurch realisiert werden, dass die jeweiligen Zähne ausgehend vom Zahnfuß lediglich im Wesentlichen bis zur Hälfte der Zahnhöhe das erste, hochpermeable Material umfassen. Somit wird das teurere, hochpermeable Material nur für jene Bereiche des jeweiligen Magnetpols eingesetzt, in welchen die höchsten magnetischen Flussdichten zu erwarten sind.

Bei einer weiteren vorteilhaften Ausgestaltung der Erfindung ist das erste Material aus einer Kobalt-Eisen-Legierung ausgeführt, wobei das zweite Material aus Stahl ausgeführt ist.

Durch die Ausführung des ersten Materials als eine Kobalt-Eisen-Legierung können im ersten Material große magnetische Flussdichten von bis zu 2 Tesla erreicht werden. Weil die vergleichsweise teure Kobalt-Eisen-Legierung nur dort eingesetzt wird, wo große Flussdichten erreicht werden, ist der Einsatz dieses Materials besonders wirtschaftlich. Das zweite Material, welches für die magnetischen Eigenschaften und die erreichbare Leistung des Aktivteils weniger wichtig ist, wird dagegen aus besonders kostengünstig herstellbarem Stahl ausgeführt.

Bei einer weiteren vorteilhaften Ausgestaltung der Erfindung ist das erste Material und/oder das zweite Material in geblechter Form ausgeführt und die jeweiligen Bleche sind in Ebenen angeordnet, welche senkrecht zu den Nuten sind.

Die Bleche werden dabei derart angeordnet, dass darin die erwünschten Magnetfeldlinien besonders gut geleitet werden und unerwünschte Wirbelströme effektiv verhindert werden können. Üblicherweise sind die Nuten entlang einer bestimmten Richtung angeordnet. Beispielsweise sind die Nuten bei rotatorischen elektrischen Maschinen, wie bei Elektromotoren und Radialmagnetlagern mit einem Stator und einem Rotor, in axialer Richtung des Rotors angeordnet. Bei Linearmotoren sind die Nuten hingegen längs der Bewegungsrichtung des Läufers angeordnet. Um Nutrasten zu vermeiden, kann die Richtung der Nuten bei rotatorischen Maschinen eine geringfügige Abweichung von der axialen Richtung bzw. bei Linearmotoren von der Richtung quer zur Bewegungsrichtung aufweisen. Die Bleche sowohl des ersten als auch des zweiten Materials sind somit senkrecht zu den Nuten angeordnet.

Ein weiterer Vorteil ergibt sich insbesondere bei besonders groß ausgeführten Aktivteilen. Denn die Bleche aus dem hochpermeablen ersten Material eines jeweiligen Zahnes, beispielsweise einer Kobalt-Eisen-Legierung, sind auch bei besonders großen Aktivteilen vergleichsweise klein, so dass sie nicht weiter in Segmente unterteilt werden müssen. Obwohl das erste Material oftmals lediglich in kleineren Blechgrößen verfügbar ist als übliche Stahlbleche, reichen die verfügbaren Blechgrößen von gängigen hochpermeablen Materialien, wie zum Beispiel Kobalt-Eisen-Legierungen, dennoch aus, um damit auch vergleichsweise große Aktivteile herzustellen.

Im Gegensatz dazu ist es bei einem großen Aktivteil, das ausschließlich aus Blechen aus einem hochpermeablen Material besteht, unumgänglich, die Bleche in Segmente zu unterteilen, was notwendigerweise zu Fugen zwischen den einzelnen Segmenten führt. Dies bringt wiederum Nachteile in Form von höheren Verlusten bei der Führung der Magnetfeldlinien durch die Fugen von einem Segment zum benachbarten Segment mit sich.

Bei einer weiteren vorteilhaften Ausgestaltung der Erfindung sind die Wicklungen jeweils als Zahnspulen ausgeführt. Dies bedeutet, dass eine Wicklung jeweils nur um einen einzelnen Zahn herum verläuft, so dass dieser Zahn einen magnetischen Pol bildet, sobald die Zahnwicklung bestromt ist. Durch das Vorsehen von Zahnspulen kann die Bauform des Aktivteils noch kompakter gestaltet werden, weil die Nuten jeweils besonders dicht mit Wicklungen gefüllt sind.

Bei einer weiteren vorteilhaften Ausgestaltung der Erfindung ist die Grenztiefe kleiner als die Zahnhöhe, wobei das Aktivteil ausgehend vom jeweiligen Zahnfuß bis zu einer jeweiligen weiteren Grenztiefe, welche jeweils größer als die Grenztiefe und jeweils höchstens gleich der Zahnhöhe ist, ein jeweiliges weiteres Material mit einer jeweiligen weiteren magnetischen Permeabilität umfasst, wobei die zweite magnetische Permeabilität größer als die jeweilige weitere magnetische Permeabilität ist.

Somit weist das Aktivteil eine Abfolge von Materialien auf, wobei deren magnetische Permeabilität vom Zahnfuß her abnimmt. Somit ist das Material mit der größeren Permeabilität dem Luftspalt der entsprechenden elektrischen Maschine am nächsten. Anschließend sind die Materialien mit absteigender magnetischer Permeabilität angeordnet. Für das Beispiel einer Innenläufermaschine ist somit das Material mit der höchsten magnetischen Permeabilität radial ganz innen angeordnet, wobei sich die Materialien mit absteigender magnetischer Permeabilität nach radial außen anschließen.

Während des Betriebs nimmt dabei die Feldliniendichte im jeweiligen Zahn vom Zahnfuß her ab, so dass die Anforderungen an die magnetische Permeabilität eines Zahns sinken. Im gleichen Maße können damit vergleichsweise günstigere Materialen, beispielsweise für die Bleche, verwendet werden. Jedes dieser Materialien kann dabei derart optimiert werden, dass es in den auftretenden Betriebsfällen der elektrischen Maschine gerade noch nicht in Sättigung geht.

In Abhängigkeit der Position der Grenztiefe kann die weitere Grenztiefe somit beispielsweise zwischen 1/3 und 100 % der Zahnhöhe betragen. Denkbar ist insbesondere, dass die weitere Grenztiefe im Wesentlichen gleich der halben, gleich 2/3 oder gleich 80 % der Zahnhöhe ist.

Bei einer weiteren vorteilhaften Ausgestaltung der Erfindung verjüngt sich bei einem Aktivteil mit einer Rotationsachse der jeweilige Zahn zumindest abschnittsweise in Richtung zum jeweiligen Zahnfuß. Die Zähne des Aktivteils bzw. Stators werden somit nicht parallelflankig, sondern derart ausgebildet, dass sich die Querschnittsfläche eines Zahnes radial nach innen verjüngt und insbesondere ein Trapez, vorzugsweise ein gleichschenkliges Trapez bildet. Insbesondere bei Rotationsmaschinen können die Zähne derart ausgeführt werden, dass die Breite der jeweiligen Nut in radialer Richtung zumindest entlang jenes Bereichs, in welchem die Wicklungen eingebracht sind, im Wesentlichen konstant ist.

Für eine maximale Ausnützung der Maschine ist auch der Kupferfüllfaktor der Nuten eine entscheidende Eigenschaft, wobei die Erhöhung des Kupferfüllfaktors durch den Nutquerschnitt bzw. durch die Nutschlitzbreite bei einem mit Zahnspulen von der Seite der Statorbohrung bestückten Stator prinzipiell begrenzt ist. Durch die sich nach radial innen verjüngenden Zähne steht somit mehr Bauraum für elektrische Wicklungen in den Nuten zur Verfügung, so dass damit letztendlich eine Erhöhung des Strombelags der Nut und eine einhergehende Erhöhung z.B. des abgebbaren Drehmoments der Maschine erreicht werden kann.

Insgesamt kann somit der Kupferfüllfaktor der Nuten erhöht werden, ohne dass die magnetische Leitfähigkeit darunter leidet. Dies gilt umso mehr für die oben erläuterten Aktivteile mit mehreren Materialien unterschiedlicher magnetischer Permeabilität, die in ihrer Reihenfolge im jeweiligen Zahn vom Zahnfuß her nach abnehmender magnetischer Permeabilität angeordnet sind. Bei Materialen mit vergleichsweise hoher Permeabilität müssen die geometrischen Abmessungen des Zahns nicht mehr denen eines konventionellen Blechschnitts folgen, sondern können in ihrer Geometrie derart optimiert werden, dass gerade keine magnetische Sättigung der Materialien in den angestrebten Betriebsfällen der elektrischen Maschine bzw. des Radialmagnetlagers eintritt.

Das erfindungsgemäße Verfahren sieht die Herstellung von geblechten Zähnen und dem geblechten äußeren Stator-Hohlzylinder vor, wobei die Verbindung der Bleche zu einem Blechpaket beispielsweise durch Schweißen oder Verkleben der Bleche erreicht wird oder dadurch, dass die Bleche mit Backlack versehen sind und anschließend die gestapelten Bleche zur Verbindung erhitzt werden.

Der innere Stator-Hohlzylinder und der äußere Stator-Hohlzylinder können beispielsweise dadurch zusammengefügt werden, dass der äußere Stator-Hohlzylinder erhitzt wird und auf den inneren Stator-Hohlzylinder aufgeschrumpft wird.

Dabei ist bei Aktivteilen mit einem besonders großen Durchmesser auch möglich, dass der äußere Stator-Hohlzylinder aus segmentierten Stahlblechen gebildet wird, wobei insbesondere auf die beiden schon verbundenen inneren und äußeren Stator-Hohlzylinder ein metallisches Gehäuse aufgeschrumpft wird.

Selbstverständlich können mit dem erfindungsgemäßen Verfahren nicht nur Radialmagnetlager hergestellt werden, sondern auch rotatorische Elektromotoren, die ebenfalls einen hohlzylindrischen Stator aufweisen.

Weist das Aktivteil dabei lediglich die zuvor erläuterte Grenztiefe auf, sind die einzelnen Zähne ab der Grenztiefe nach radial außen vorzugsweise aus Stahlblechen gefertigt. Sind hingegen eine oder mehrere Grenztiefen vorgesehen, so sind die einzelnen Zähne ab der radial äußersten Grenztiefe nach radial außen vorzugsweise aus Stahlblechen gefertigt, wobei zwischen den jeweiligen Grenztiefe jeweils weitere Materialien zum Einsatz kommen, deren jeweilige magnetische Permeabilitäten nach radial außen abnehmen. Entsprechend können weitere Stator-Hohlzylinder gefertigt werden, welche zusammen mit dem inneren Stator-Hohlzylinder und dem äußeren Stator-Hohlzylinder zum hohlzylinderförmigen Stator des Aktivteils zusammengesetzt werden können.

Im Folgenden wird die Erfindung anhand der in den Figuren dargestellten Ausführungsbeispiele näher beschrieben und erläutert. Es zeigen:
- FIG 1: einen Querschnitt eines Radialmagnetlagers gemäß Stand der Technik,
- FIG 2: ein erstes Beispiel eines Aktivteils für einen Linearmotor,
- FIG 3: ein zweites Beispiel eines Aktivteils für einen Linearmotor,
- FIG 4: einen Ausschnitt eines ersten Ausführungsbeispiels des erfindungsgemäßen Aktivteils für ein Radialmagnetlager,
- FIG 5: einen Ausschnitt eines zweiten Ausführungsbeispiels des erfindungsgemäßen Aktivteils für ein Radialmagnetlager,
- FIG 6: einen Ausschnitt eines dritten Ausführungsbeispiels des erfindungsgemäßen Aktivteils für ein Radialmagnetlager, und
- FIG 7: einen Zahn eines vierten Ausführungsbeispiels des erfindungsgemäßen Aktivteils für ein Radialmagnetlager.

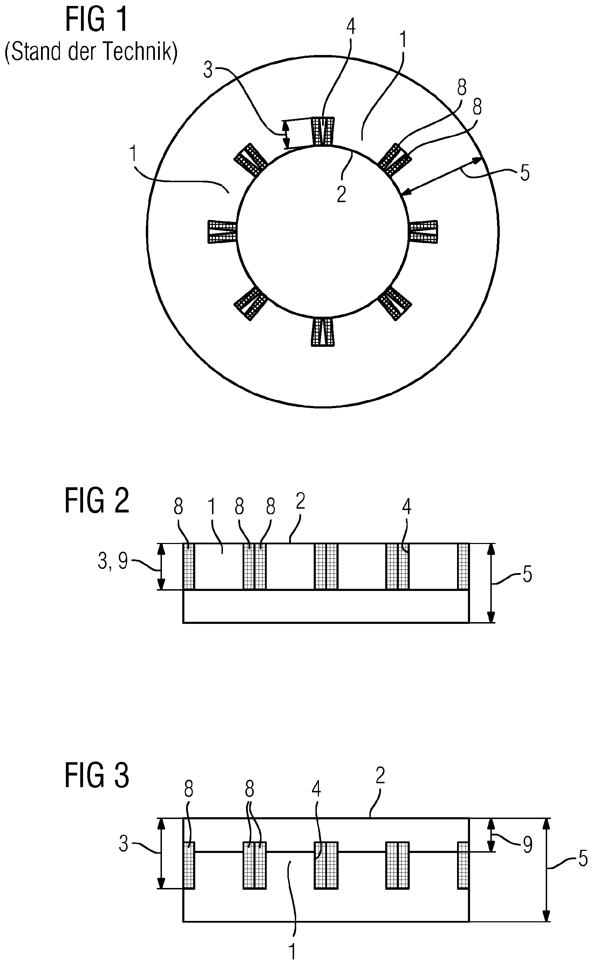

Figur 1 zeigt einen Querschnitt eines Radialmagnetlagers gemäß Stand der Technik. Das Radialmagnetlager weist ein hohlzylinderförmiges Aktivteil auf, innerhalb dessen konzentrisch zur Achse des Aktivteils eine nicht näher dargestellte Welle angeordnet ist.

Das Aktivteil wird gebildet durch nebeneinander angeordnete Zähne 1, die eine Zahnhöhe 3 aufweisen sowie einen Zahnfuß 2, der nach radial innen weist. Zwischen zwei benachbarten Zähnen 1 sind axial verlaufende Nuten 4 angeordnet, in welche Wicklungen 8 eingebracht sind. Das Aktivteil weist eine von radial innen nach radial außen gemessene Aktivteildicke 5 auf.

Gemäß Stand der Technik sind die Bleche in axialer Richtung gestapelt und aus einem einzigen Material gefertigt, wobei beispielsweise Stahl oder eine Legierung mit vergleichsweise hoher magnetischer Permeabilität zum Einsatz kommt.

Figur 2 zeigt ein erstes Beispiel eines Aktivteils für einen Linearmotor. Das Aktivteil weist Zähne 1 mit Zahnfüßen 2 auf, wobei die Zähne 1 eine Zahnhöhe 3 und das Aktivteil eine Aktivteildicke 5 aufweisen. Zwischen benachbarten Zähnen 1 sind offene Nuten 4 angeordnet, in welche Wicklungen 8 eingebracht sind. Dabei können für die einzelnen Zähne 1 jeweils Zahnspulen vorgesehen werden, so dass jeder einzelne Zahn 1 bei Bestromung der jeweiligen Spulen einen magnetischen Pol bildet.

Ausgehend von den Zahnfüßen 2 bis zu einer Grenztiefe 9, welche im Rahmen dieses Beispiels gleich der Zahnhöhe 3 ist, sind die Zähne 1 des Aktivteils aus einem ersten Material mit höherer magnetischer Permeabilität gefertigt. Der restliche Bereich des Aktivteils ist hingegen aus einem zweiten Material mit geringerer magnetischer Permeabilität gefertigt. Beispielsweise kann das erste Material als eine geblechte Kobalt-Eisen-Legierung und das zweite Material als Stahlblech ausgeführt sein, wobei die jeweiligen Bleche senkrecht zur Richtung der Nuten 4 gestapelt sind.

Wenn das Aktivteil als Stator eines Linearmotors ausgeführt ist, ist der Läufer des Linearmotors auf der Seite der Zahnfüße 2 senkrecht zu den Nuten 4 und entlang den benachbarten Zähnen 1 bewegbar, das heißt in der Darstellung von Figur 2 von rechts nach links oder umgekehrt.

Figur 3 zeigt ein zweites Beispiel eines Aktivteils für einen Linearmotor. Gleiche Bezugszeichen wie in Figur 2 bezeichnen hierbei gleiche Gegenstände. Im Gegensatz zum ersten Beispiel sind die Nuten 4 im Rahmen des zweiten Beispiels als geschlossene Nuten 4 ausgeführt. Weiterhin ist die Grenztiefe 9 nunmehr gleich der halben Zahnhöhe 3, so dass die Zähne 1 von ihrem jeweiligen Zahnfuß 2 bis zur Grenztiefe 9 aus dem ersten Material gefertigt sind und der restliche Bereich der jeweiligen Zähne 1 aus dem zweiten Material gefertigt ist.

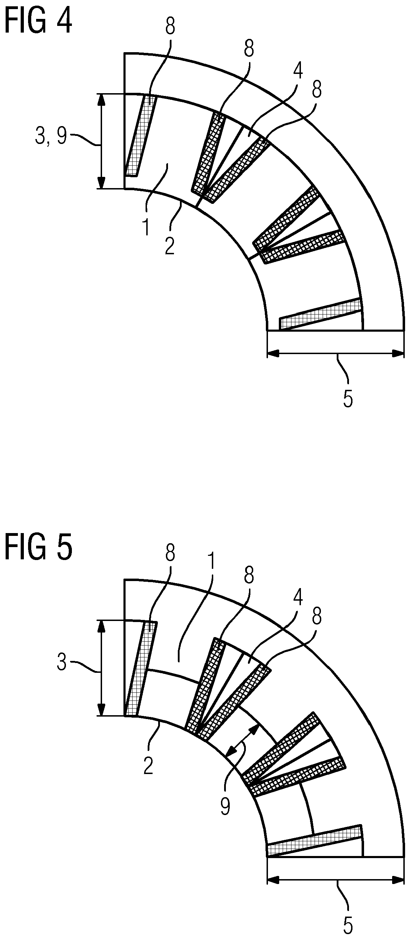

Figur 4 zeigt einen Ausschnitt eines ersten Ausführungsbeispiels des erfindungsgemäßen Aktivteils für ein Radialmagnetlager. Gezeigt ist ein Viertel eines Querschnitts durch das hohlzylinderförmige Aktivteil. Der Ausschnitt zeigt drei Zähne 1, welche jeweils einen nach innen gerichteten Zahnfuß 2 sowie eine Zahnhöhe 3 aufweisen. Zwischen benachbarten Zähnen 1 sind annähernd keilförmige Nuten 4 angeordnet, in welche Wicklungen 8 eingebracht sind. Die Wicklungen 8 können dabei beispielsweise als Zahnspulen ausgeführt sein.

Das Aktivteil ist von radial innen, beginnend bei den jeweiligen Zahnfüßen 2, nach radial außen bis zu einer Grenztiefe 9, welche in diesem Fall gleich der Zahnhöhe 3 ist, aus einem ersten Material mit einer höheren magnetischen Permeabilität gefertigt. Ausgehend von der Grenztiefe 9 bis zum radial äußeren Rand des Aktivteils ist das Aktivteil aus einem zweiten Material mit einer geringeren magnetischen Permeabilität. Beispielsweise kann das erste Material als eine geblechte Kobalt-Eisen-Legierung und das zweite Material als Stahlblech ausgeführt sein, wobei die jeweiligen Bleche senkrecht zur Achse des Hohlzylinders gestapelt sind.

Figur 5 zeigt einen Ausschnitt eines zweiten Ausführungsbeispiels des erfindungsgemäßen Aktivteils für ein Radialmagnetlager. Gleiche Bezugszeichen wie in Figur 4 bezeichnen gleiche Gegenstände, wobei wiederum ein Viertel eines Querschnitts durch das hohlzylinderförmige Aktivteil dargestellt ist.

Die einzelnen Zähne 1 sind bis zu einer Grenztiefe 9 aus einem ersten Material gefertigt, wobei die Grenztiefe 9 im Unterschied zum ersten Ausführungsbeispiel gleich der halben Zahnhöhe 3 ist. Weiterhin sind die Nuten 4 nunmehr geschlossen ausgeführt, was aufgrund positiver Auswirkungen auf höhere Harmonische des Magnetflusses insgesamt Verluste sparen kann. Das erste Material kann wiederum als eine geblechte Kobalt-Eisen-Legierung und das zweite Material als Stahlblech ausgeführt sein, wobei die jeweiligen Bleche senkrecht zur Achse des Hohlzylinders gestapelt sind.

Ein Radialmagnetlager, dessen Aktivteil im ersten bzw. zweiten Ausführungsbeispiel illustriert wurde, kann beispielsweise derart hergestellt werden, dass das Aktivteil als hohlzylindrischer Stator ausgeführt wird, welches sich aus einem inneren Stator-Hohlzylinder und einem äußeren Stator-Hohlzylinder zusammensetzt. Der innere Stator-Hohlzylinder ist dabei der Bereich von den Zahnfüßen 2 nach radial außen bis zur Grenztiefe 9 und der äußere Stator-Hohlzylinder ist der Bereich von der Grenztiefe 9 bis zum radial äußeren Rand des Aktivteils.

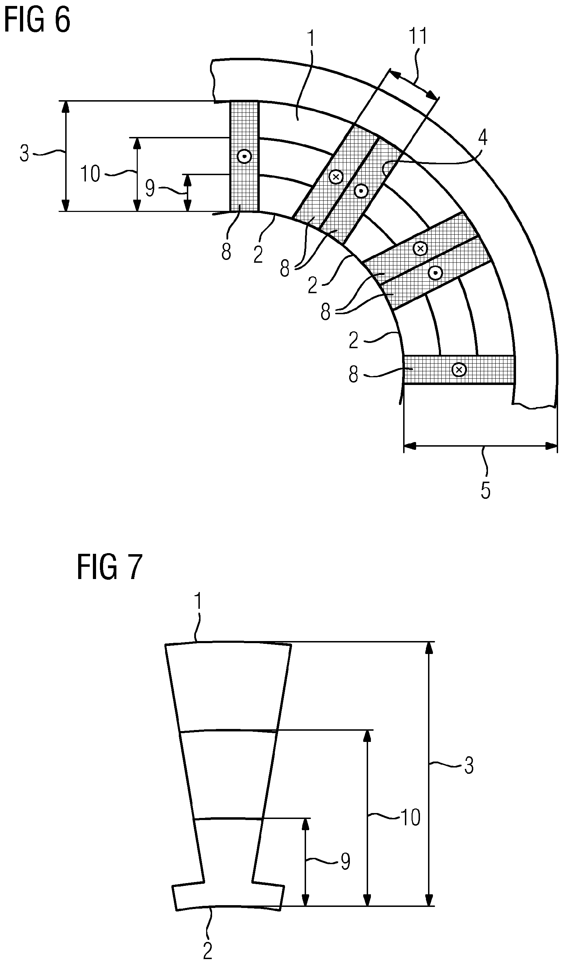

Figur 6 zeigt einen Ausschnitt eines dritten Ausführungsbeispiels des erfindungsgemäßen Aktivteils für ein Radialmagnetlager, wobei wiederum ein Viertel eines Querschnitts durch das hohlzylinderförmige Aktivteil dargestellt ist.

Ausgehend von einem Zahnfuß 2 ist der jeweilige Zahn 1 bis zu einer Grenztiefe 9 aus einem ersten Material mit vergleichsweise hoher magnetischer Permeabilität gefertigt. Nach radial außen schließt sich bis zu einer weiteren Grenztiefe 10 ein zweites Material mit einer geringeren magnetischen Permeabilität als das erste Material an. Von der weiteren Grenztiefe 10 nach radial außen ist schließlich ein weiteres Material vorgesehen, welches wiederum eine geringere magnetische Permeabilität als das zweite Material aufweist.

Der jeweilige Zahn 1 verjüngt sich dabei in Richtung zum jeweiligen Zahnfuß 2, das heißt nach radial innen. Dadurch wird erreicht, dass für die in der Nut 4 befindlichen Wicklungen 8 vergleichsweise viel Raum zur Verfügung steht und der Kupferfüllfaktor erhöht werden kann. Dabei ist im vorliegenden Ausführungsbeispiel die Nutbreite 11 der jeweiligen Nut 4 in radialer Richtung im Wesentlichen konstant, wobei der jeweilige Zahn 1 von einer Zahnspule umschlossen ist, so dass in einer Nut jeweils Wicklungen zweier benachbarter Zahnspulen angeordnet sind.

Gleichzeitig wird durch die Anordnung von besonders magnetisch permeablen Materialien an Stellen mit besonders hoher Magnetfeldliniendichte eine Sättigung des Material des jeweiligen Zahnes 1 während des Betriebs des Radialmagnetlagers zuverlässig vermieden.

Figur 7 zeigt einen Zahn 1 eines vierten Ausführungsbeispiels des erfindungsgemäßen Aktivteils für ein Radialmagnetlager. Der Zahn 1 verjüngt sich abschnittsweise in Richtung zu seinem Zahnfuß 2. Dabei weist der Zahn 1 von radial innen nach radial außen Materialien unterschiedlicher magnetischer Permeabilität auf, wie im dritten Ausführungsbeispiel beschrieben.

Ein Aktivteil mit mehreren derartigen Zähnen 1 weist entsprechend geschlossene Nuten 4 aufweisen, in welchen die Wicklungen 8 angeordnet sind.

Das jeweilige Aktivteil des ersten bis vierten Ausführungsbeispiels für ein Radialmagnetlager kann ohne große Anpassungen ebenfalls für einen rotatorischen Elektromotor verwendet werden.

## Patentansprüche

1. Radialmagnetlager umfassend:
- ein Aktivteil, welches als hohlzylinderförmiger Stator ausgeführt ist,
- Zähne (1), welche jeweils einen Zahnfuß (2) und eine Zahnhöhe (3) aufweisen und welche bezüglich des Hohlzylinders nach radial innen weisen,
- zwischen den Zähnen (1) angeordnete, offene oder geschlossene Nuten (4), und
- in den Nuten (4) eingebrachten Wicklungen (8), welche jeweils zumindest einen der Zähne (1) umschließen,
wobei das Aktivteil ab der äußeren Oberfläche der jeweiligen Zahnfüße (2) und in Verlängerung der Zähne (1) eine Aktivteildicke (5) aufweist, die größer als die Zahnhöhe (3) ist, **dadurch gekennzeichnet, dass** das Aktivteil
- ausgehend vom jeweiligen Zahnfuß (2) bis zu einer Grenztiefe (9), welche höchstens gleich der Zahnhöhe (3) ist, ein erstes Material mit einer ersten magnetischen Permeabilität umfasst und
- ab der Grenztiefe (9) ein zweites Material mit einer zweiten magnetischen Permeabilität umfasst,
wobei die erste magnetische Permeabilität größer als die zweite magnetische Permeabilität ist,
wobei die Grenztiefe (9) zwischen 20 % und 100 % der Zahnhöhe (3) beträgt.

2. Radialmagnetlager nach Anspruch 1,
wobei die Grenztiefe (9) zwischen 1/3 und 2/3 der Zahnhöhe (3) beträgt.

3. Radialmagnetlager nach einem der vorhergehenden Ansprüche, wobei die Grenztiefe (9) im Wesentlichen halb so groß wie die Zahnhöhe (3) ist.

4. Radialmagnetlager nach einem der vorhergehenden Ansprüche, wobei das erste Material aus einer Kobalt-Eisen-Legierung ausgeführt ist,
wobei das zweite Material aus Stahl ausgeführt ist.

5. Radialmagnetlager nach einem der vorhergehenden Ansprüche,
wobei das erste Material und/oder das zweite Material in geblechter Form ausgeführt ist, und
wobei die jeweiligen Bleche in Ebenen angeordnet sind, welche senkrecht zu den Nuten (4) sind.

6. Radialmagnetlager nach einem der vorhergehenden Ansprüche, wobei die Wicklungen (8) jeweils als Zahnspulen ausgeführt sind.

7. Radialmagnetlager nach einem der vorhergehenden Ansprüche, wobei die Grenztiefe (9) kleiner als die Zahnhöhe (3) ist, wobei das Aktivteil ausgehend vom jeweiligen Zahnfuß (2) bis zu einer jeweiligen weiteren Grenztiefe (10), welche jeweils größer als die Grenztiefe (9) und jeweils höchstens gleich der Zahnhöhe (3) ist, ein jeweiliges weiteres Material mit einer jeweiligen weiteren magnetischen Permeabilität umfasst, wobei die zweite magnetische Permeabilität größer als die jeweilige weitere magnetische Permeabilität ist.

8. Radialmagnetlager nach einem der vorhergehenden Ansprüche, wobei sich bei einem Aktivteil mit einer Rotationsachse der jeweilige Zahn (1) zumindest abschnittsweise in Richtung zum jeweiligen Zahnfuß (2) verjüngt.

9. Verfahren zur Herstellung eines Radialmagnetlagers nach einem der vorhergehenden Ansprüche mit den folgenden Verfahrensschritten:
- Herstellen der einzelnen Zähne (1),
welche, falls die Grenztiefe (9) kleiner als die Zahnhöhe (3) ist, ausgehend vom jeweiligen Zahnfuß (2) bis zu der Grenztiefe (9) aus Blechen einer Kobalt-Eisen-Legierung gefertigt sind,
welche, falls die Grenztiefe (9) gleich der Zahnhöhe (3) ist, aus Blechen einer Kobalt-Eisen-Legierung gefertigt sind,
wobei die Bleche in axialer Richtung des Radialmagnetlagers gestapelt sind,
- Aufbringen einer Zahnwicklung auf jeden Zahn (1),
- Herstellen eines inneren Stator-Hohlzylinders, welcher aus in Umfangsrichtung angeordneten und jeweils mit einer Zahnwicklung (9) versehenen Zähnen (1) zusammengesetzt wird, wobei die Zahnfüße (2) nach radial innen weisen,
- Herstellen eines äußeren Stator-Hohlzylinders aus geblechtem Stahl, wobei die Bleche in axialer Richtung des Radialmagnetlagers gestapelt sind,
- Zusammenfügen des inneren Stator-Hohlzylinders und des äußeren Stator-Hohlzylinders zum hohlzylinderförmigen Stator des Aktivteils.

## Claims

1. Radial magnetic bearing comprising:
- an active part, which is embodied as a hollow cylindrical stator,
- teeth (1), each of which has a tooth base (2) and a tooth height (3), and which point radially inwards relative to the hollow cylinder,
- open or closed slots (4) which are arranged between the teeth (1), and
- windings (8) which are introduced into the slots (4) and surround at least one of the teeth (1) in each case,
wherein starting from the outer surface of the respective tooth bases (2) and in extension of the teeth (1), the active part has an active part thickness (5) which is greater than the tooth height (3), **characterised in that** the active part
- starting from the respective tooth base (2) and extending to a limit depth (9) which is at most equal to the tooth height (3) comprises a first material having a first magnetic permeability and
- beyond the limit depth (9) comprises a second material having a second magnetic permeability,
wherein the first magnetic permeability is greater than the second magnetic permeability,
wherein
the limit depth (9) is between 20% and 100% of the tooth height (3).

2. Radial magnetic bearing according to claim 1,
wherein the limit depth (9) is between 1/3 and 2/3 of the tooth height (3).

3. Radial magnetic bearing according to one of the preceding claims,
wherein the limit depth (9) is essentially half as great as the tooth height (3).

4. Radial magnetic bearing according to one of the preceding claims,
wherein the first material is made from a cobalt-iron alloy, wherein the second material is made from steel.

5. Radial magnetic bearing according to one of the preceding claims,
wherein the first material and/or the second material is embodied in laminated form, and
wherein the respective sheets are arranged in layers which are perpendicular relative to the slots (4).

6. Radial magnetic bearing according to one of the preceding claims,
wherein the windings (8) are embodied as tooth-wound coils in each case.

7. Radial magnetic bearing according to one of the preceding claims,
wherein the limit depth (9) is smaller than the tooth height (3), wherein starting from the respective tooth base (2) and extending to a respective further limit depth (10) which is in each case greater than the limit depth (9) and at most equal to the tooth height (3), the active part comprises a respective further material having a respective further magnetic permeability, wherein the second magnetic permeability is greater than the respective further magnetic permeability.

8. Radial magnetic bearing according to one of the preceding claims,
wherein in the case of an active part having an axis of rotation, the respective tooth (1) tapers at least sectionally towards the respective tooth base (2).

9. Method for producing a radial magnetic bearing according to one of the preceding claims, comprising method steps as follows:
- producing the individual teeth (1),
which, if the limit depth (9) is less than the tooth height (3), are manufactured from sheets of a cobalt-iron alloy starting from the respective tooth base (2) and extending to the limit depth (9),
which, if the limit depth (9) is equal to the tooth height (3), are manufactured from sheets of a cobalt-iron alloy, wherein the sheets are stacked in an axial direction of the radial magnetic bearing,
- applying a tooth winding onto each tooth (1),
- producing an inner stator hollow cylinder, which is composed of teeth (1) that are arranged in a circumferential direction and provided with a tooth winding in each case, wherein the tooth bases (2) point radially inwards,
- producing an outer stator hollow cylinder from laminated steel, wherein the sheets are stacked in an axial direction of the radial magnetic bearing,
- assembling the inner stator hollow cylinder and the outer stator hollow cylinder to form the hollow cylindrical stator of the active part.

## Revendications

1. Palier magnétique radial, comprenant :
- une partie active, qui est réalisée sous la forme d'un stator en forme de cylindre creux,
- des dents (1), qui ont chacune une base (2) de dent et une hauteur (3) de dent et qui sont tournées vers l'intérieur radialement par rapport au cylindre creux,
- des encoches (4), ouvertes ou fermées, disposées entre les dents (1) et
- des enroulements (8), qui sont disposés dans les encoches (4) et qui entourent chacun au moins l'une des dents (1),
dans lequel la partie active a, à partir de la surface extérieure de la base (2) de dent respective et en prolongement des dents (1), une épaisseur (5) de partie active, qui est plus grande que la hauteur (3) de dent, **caractérisé en ce que** la partie active,
- à partir de la base (2) de dent respective jusqu'à une profondeur (9) limite, qui est au plus égale à la hauteur (3) de dent, comprend un premier matériau ayant une première perméabilité magnétique et
- à partir de la profondeur (9) limite, comprend un deuxième matériau ayant une deuxième perméabilité magnétique,
la première perméabilité magnétique étant plus grande que la deuxième perméabilité magnétique,
la profondeur (9) limite représentant entre 20% et 100% de la hauteur (3) de dent.

2. Palier magnétique radial suivant la revendication 1,
dans lequel la profondeur (9) de dent représente entre 1/3 et 2/3 de la hauteur (3) de dent.

3. Palier magnétique radial suivant l'une des revendications précédentes,
dans lequel la profondeur (9) de dent représente sensiblement la moitié de la hauteur (3) de dent.

4. Palier magnétique radial suivant l'une des revendications précédentes,
dans lequel le premier matériau est réalisé à partir d'un alliage de cobalt et de fer,
dans lequel le deuxième matériau est réalisé à partir d'acier.

5. Palier magnétique radial suivant l'une des revendications précédentes,
dans lequel le premier matériau et/ou le deuxième matériau est réalisé sous une forme feuilletée et
dans lequel les tôles respectives sont disposées dans un plan, qui est perpendiculaire aux encoches (4).

6. Palier magnétique radial suivant l'une des revendications précédentes,
dans lequel les enroulements (8) sont réalisés chacun sous la forme de bobines à dent.

7. Palier magnétique radial suivant l'une des revendications précédentes,
dans lequel la profondeur (9) limite est plus petite que la hauteur (3) de dent, la partie active allant de la base (2) de dent respective à une autre profondeur (10) de dent respective, qui est respectivement plus grande que la profondeur (9) de dent et respectivement au plus égale à la profondeur (3) de dent, comprenant un autre matériau respectif, ayant une autre perméabilité magnétique respective, la deuxième perméabilité magnétique étant plus grande que respectivement l'autre perméabilité magnétique.

8. Palier magnétique radial suivant l'une des revendications précédentes,
dans lequel, pour une partie active ayant un axe de révolution, la dent (1) respective se rétrécit, au moins par endroit, en direction de la base (2) de dent respective.

9. Procédé de fabrication d'un palier magnétique radial suivant l'une des revendications précédentes, comprenant les stades de procédé suivants :
- on fabrique les diverses dents (1), qui, si la profondeur (9) limite est plus petite que la hauteur (3) de dent, sont fabriquées, en partant de la base (2) de dent respective jusqu'à la profondeur (9) de dent, en des tôles d'un alliage de cobalt-fer, qui, si la profondeur (9) de dent est égale à la hauteur (3) de dent, sont fabriquées en des tôles d'un alliage de cobalt-fer,
les tôles étant empilées dans la direction axiale du palier magnétique radial,
- on met un enroulement de dent sur chaque dent (1),
- on fabrique un cylindre intérieur creux de stator, qui est composé de dents (1) disposées dans la direction périphérique et pourvues chacune d'un enroulement (9) de dent, dans lequel
les bases (2) de dent sont tournées vers l'intérieur radialement,
- on fabrique un cylindre extérieur creux de stator en acier feuilleté, les tôles étant empilées dans la direction axiale du palier magnétique radial,
- on assemble le cylindre intérieur creux de stator et le cylindre extérieur creux de stator en le stator en forme de cylindre creux de la partie active.
